# EUROPEAN PATENT SPECIFICATION

(11) **EP 4 468 072 B1**
(45) Date of publication and mention of the grant of the patent: **17.06.2026**
(21) Application number: 23844917.7
(22) Date of filing: 21.04.2023
(51) Int. Cl.: G02F 1/1333, G09F 9/30, G09F 9/35, F21V 8/00, G02F 1/1335

(54) **DISPLAY MODULE AND ELECTRONIC DEVICE**
ANZEIGEMODUL UND ELEKTRONISCHE VORRICHTUNG
MODULE D'AFFICHAGE ET DISPOSITIF ÉLECTRONIQUE

(30) Priority: 29.07.2022 CN 202222000605 U
(43) Date of publication of application: 27.11.2024
(73) Proprietor: Honor Device Co., Ltd., Shenzhen, Guangdong 518040 (CN)
(72) Inventor: ZHAO, Qi, Shenzhen, Guangdong 518040 (CN); ZHANG, Tenghe, Shenzhen, Guangdong 518040 (CN); XU, Xiaokang, Shenzhen, Guangdong 518040 (CN); WANG, Yuelin, Shenzhen, Guangdong 518040 (CN); ZHOU, Nan, Shenzhen, Guangdong 518040 (CN); WU, Xiao, Shenzhen, Guangdong 518040 (CN)
(74) Representative: Gill Jennings & Every LLP
(86) International application number: PCT/CN2023/089850
(87) International publication number: WO 2024/021701

(56) References cited:
- CN-A- 110 579 906
- CN-A- 110 579 906
- CN-A- 112 578 860
- CN-U- 205 160 659
- CN-U- 206 193 608
- CN-U- 218 383 546
- US-A1- 2016 320 545

## Description

This application claims priority to Chinese Patent Application No. 202222000605.3, filed with the China National Intellectual Property Administration on July 29, 2022 and entitled "DISPLAY MODULE AND ELECTRONIC DEVICE".

### TECHNICAL FIELD

This application relates to the field of electronic device technologies, and in particular, to a display module and an electronic device.

### BACKGROUND

With the development of science and technology and people's pursuit of aesthetics, lightness and thinness have become one of mainstream development directions of tablet products. Because the tablet product uses a standardized USB-type C connector, a thickness of the tablet product remains unchanged. To reduce a thickness of an entire device, a security gap between the USB-type C connector and a display module is inevitably compressed, and consequently, a potential risk of poor display exists during use of the tablet product. CN 110579906A discloses a backlight module and display device including a backplate, optical film group, middle frame, and light-shielding member arranged with protruding and recessed structures.

### SUMMARY

Embodiments of this application are set out in the appended claims. A back plate that is in a display module of an electronic device located directly above a USB-type C connector is provided with a notch to increase avoidance space in a Z direction, so that a thickness of an entire device is reduced while a security gap is ensured. A light shielding member is added at the notch on the back plate to wrap the notch, to prevent a foreign object from entering the display module and further shield light.

To achieve the foregoing objective, an electronic device defined in the appended claims is provided.

### BRIEF DESCRIPTION OF DRAWINGS

FIG. 1 is a first three-dimensional diagram of a tablet computer according to some embodiments of this application;
FIG. 2 is a partially enlarged view of a tablet computer from a perspective of a top view according to some embodiments of this application;
FIG. 3A is a first partially enlarged view of a tablet computer from a perspective of a sectional view according to some embodiments of this application;
FIG. 3B is a second partially enlarged view of a tablet computer from a perspective of a sectional view according to some embodiments of this application;
FIG. 4A is a first three-dimensional diagram of a display module of a tablet computer according to some embodiments of this application;
FIG. 4B is a first partially enlarged view taken along a B-B part in FIG. 4A according to some embodiments of this application;
FIG. 5A is a second three-dimensional diagram of a display module of a tablet computer according to some embodiments of this application;
FIG. 5B is a second partially enlarged view taken along a B-B part in FIG. 5A according to some embodiments of this application;
FIG. 6A is a third partially enlarged view of a tablet computer from a perspective of a sectional view according to some embodiments of this application;
FIG. 6B is a fourth partially enlarged view of a tablet computer from a perspective of a sectional view according to some embodiments of this application;
FIG. 7A is a first partially enlarged view at a location that is on a back plate in a display module and that corresponds to a USB type C connector according to some embodiments of this application;
FIG. 7B is a first partially enlarged view of a display module from a three-dimensional perspective according to some embodiments of this application;
FIG. 8A is a first three-dimensional diagram of a back plate in a display module according to some embodiments of this application;
FIG. 8B is a second three-dimensional diagram of a back plate in a display module according to some embodiments of this application;
FIG. 9 is a second partially enlarged view at a location that is on a back plate in a display module and that corresponds to a USB type C connector according to some embodiments of this application;
FIG. 10 is a partially enlarged view of a reflection sheet in a display module according to some embodiments of this application;
FIG. 11 is a second partially enlarged view of a display module from a three-dimensional perspective according to some embodiments of this application;
FIG. 12 is a third partially enlarged view at a location that is on a back plate in a display module and that corresponds to a USB type C connector according to some embodiments of this application;
FIG. 13 is a fourth partially enlarged view at a location that is on a back plate in a display module and that corresponds to a USB type C connector according to some embodiments of this application; and
FIG. 14 is a third partially enlarged view of a display module from a three-dimensional perspective according to some embodiments of this application.

### DESCRIPTION OF EMBODIMENTS

The following describes specific implementations of this application in detail with reference to the accompanying drawings.

Embodiments of this application provide a display module. A back plate that is in the display module and that is directly above a USB-type C connector is provided with a notch to increase avoidance space in a Z direction, so that a thickness of an entire device is reduced while a security gap is ensured.

This application provides a display module used in an electronic device, and the display module uses a design in which a back plate is provided with a notch to avoid a compression structure of a USB connector (USB type C connector). Specifically, the electronic device includes but is not limited to an electronic device with a display module (for example, an LCD module) and a USB connector, such as a mobile phone, a tablet computer (tablet personal computer), an e-book reader, a laptop computer (laptop computer), a personal digital assistant (personal digital assistant, PDA), a personal computer, a notebook computer (notebook), a vehicle-mounted device, a wearable device (for example, a watch), or a box.

For ease of description, an example in which the electronic device is a tablet computer is used for description in the following, and an example in which a USB connector is a USB type C connector is used for description. The following describes the tablet computer in this application by using specific embodiments.

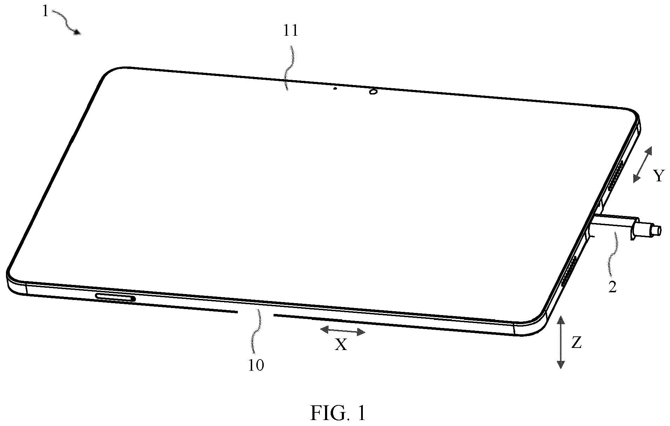

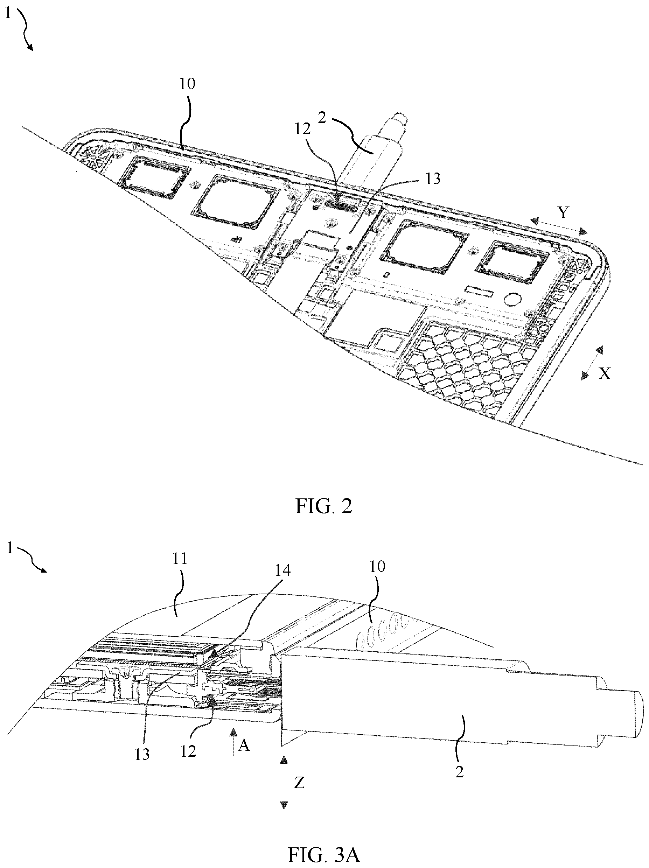

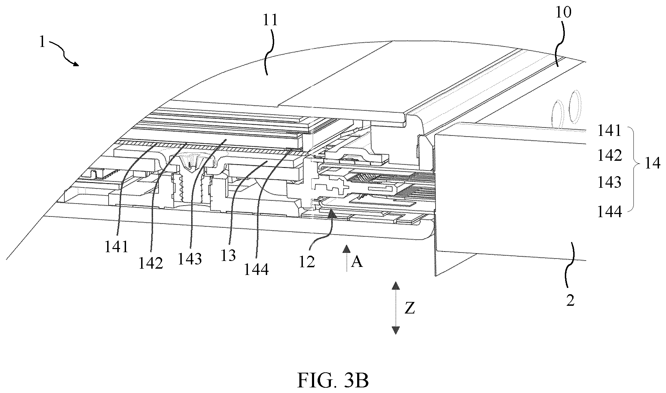

FIG. 1 is a first three-dimensional diagram of a tablet computer 1 according to an embodiment of this application, FIG. 2 is a partially enlarged view (a display module 11 is not shown) of the tablet computer 1 from a perspective of a top view according to an embodiment of this application, FIG. 3A is a first partially enlarged view of the tablet computer 1 from a perspective of a sectional view according to an embodiment of this application, and FIG. 3B is a second partially enlarged view of the tablet computer 1 from a perspective of a sectional view according to an embodiment of this application.

Referring to FIG. 1, the tablet computer 1 in this embodiment of this application includes a middle frame 10 and a display module 11. For example, the middle frame 10 is in a cuboid shape. To be specific, a size of the middle frame 10 in a length direction (shown by an X direction in FIG. 1) is greater than a size of the middle frame 10 in a width direction (shown by a Y direction in FIG. 1). The display module 11 is disposed in the middle frame 10 in a thickness direction (shown by a Z direction in FIG. 1) of the tablet computer 1. For example, a length direction, a width direction, and the thickness direction of the tablet computer 1 are perpendicular to each other.

The display module 11 may be a flexible screen or a hard screen. This is not limited herein. In this embodiment of this application, the middle frame 10 and the display module 11 may be bonded together by using a sticky material (for example, a foam tape). However, a manner of connecting the middle frame 10 and the display module 11 is not limited to using the sticky material, provided that assembly can be implemented.

As shown in FIG. 2, a USB type C connector 12 is disposed inside an end in the length direction of the tablet computer 1, and the USB type C connector 12 is mounted in the middle frame 10 by using a compression structure 13 (for example, a compression steel sheet and a bolt). The USB type C connector 12 is used for a USB plug 2 to plug in, and may implement functions such as charging or externally connected to a headset.

As shown in FIG. 3A and FIG. 3B, the display module 11 of the tablet computer 1 includes a backlight assembly 14, and the backlight assembly 14 in the display module 11 is disposed directly above the USB type C connector 12 in the thickness direction of the tablet computer 1. According to the claimed invention, the backlight assembly 14 in the display module 11 includes a back plate 141, a reflection sheet 142, and a light guide plate 143 that are stacked in the thickness direction. A direction in which the reflection sheet 142 points to the light guide plate 143 is a light emitting direction (shown by an A direction in FIG. 3A and FIG. 3B) of the display module 11, and in the light emitting direction, the reflection sheet 142 is disposed between the back plate 141 and the light guide plate 143. For example, the light guide plate 143 is adhered to the back plate 141 by using a fastening tape 144. In the light emitting direction, the back plate 141 is disposed directly above the compression structure 13 of the USB type C connector 12. The display module 11 in this embodiment of this application can reflect light upward in the light emitting direction, so that the display module 11 displays a corresponding pattern. For example, the light emitting direction is separately perpendicular to the length direction and the width direction, that is, the light emitting direction is parallel to the thickness direction.

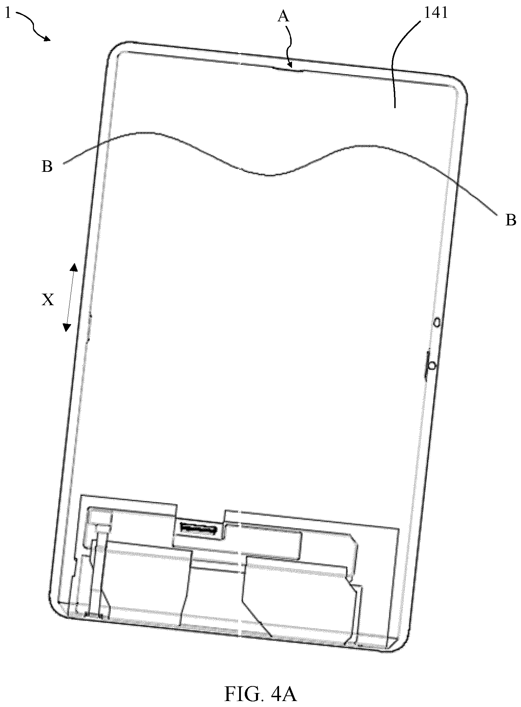

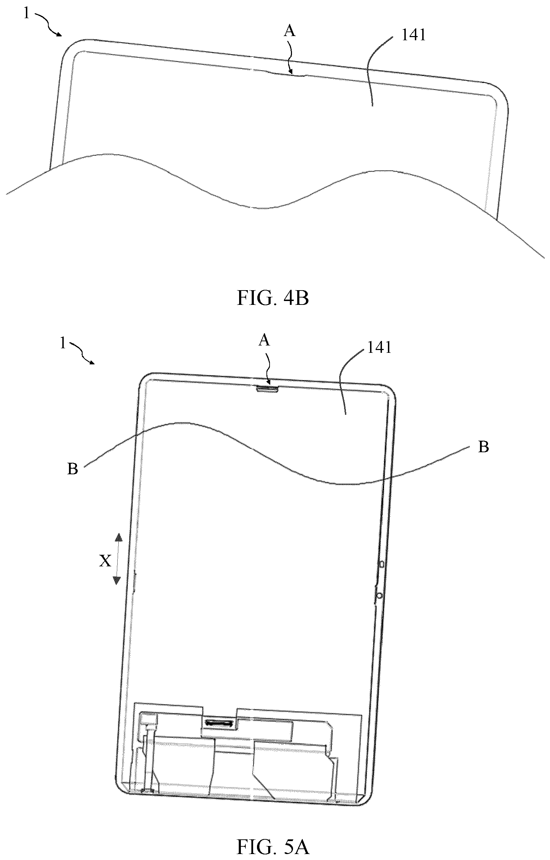

FIG. 4A is a three-dimensional diagram of the display module of the tablet computer 1 according to an embodiment of this application, FIG. 4A is a back view of the display module 11, and FIG. 4B is a partially enlarged view at a location that is on the back plate 141 and that corresponds to the USB type C connector 12 in FIG. 4A. As shown in FIG. 4B, the location that is on the back plate 141 and that corresponds to the USB type C connector 12 covers the compression structure 13 of the type C connector 12 (references may also be made to FIG. 3B).

Because the tablet computer 1 uses the standardized USB-type C connector 12, a thickness size of the USB-type C connector 12 cannot be changed (reduced). To reduce a thickness of an entire device, a security gap between the compression structure 13 of the USB-type C connector 12 and the display module 11 is inevitably compressed, and consequently, a potential risk of poor display exists during use of the tablet computer 1.

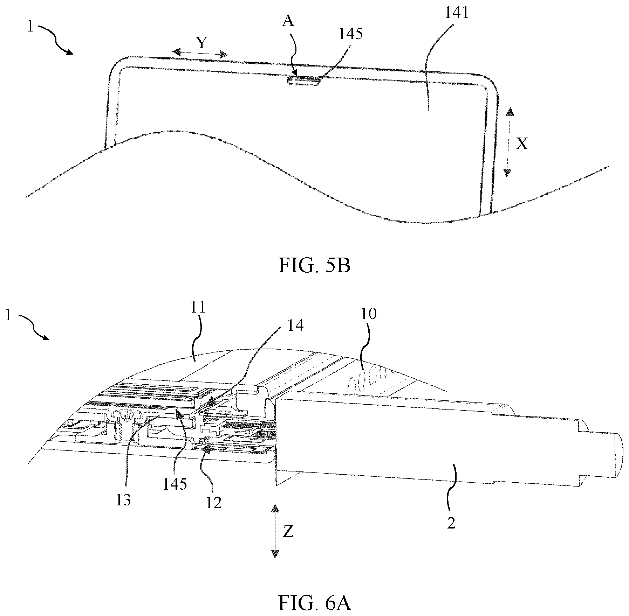

Therefore, referring to FIG. 5A and FIG. 5B, according to the claimed invention, the back plate 141 that is in the display module 11 and that is directly above the USB-type C connector 12 is provided with a notch. Specifically, a notch 145 is provided at a location (shown by an A location in FIG. 5A and FIG. 5B) that is on the back plate 141 and that corresponds to the compression structure 13 of the USB-type C connector 12. After this disposing, avoidance space between the compression structure 13 of the USB-type C connector 12 and the backlight assembly 14 in the Z direction (the thickness direction) is increased, that is, avoidance space between the compression structure 13 and the display module 11 in the Z direction (the thickness direction) is increased, so that a thickness of an entire device is reduced while a security gap is ensured.

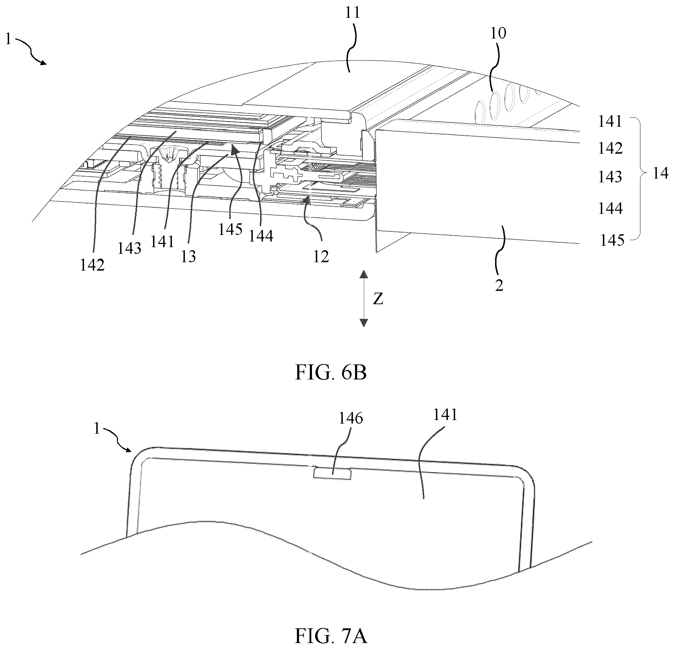

As shown in FIG. 6A and FIG. 6B, in the thickness direction (as shown by a Z direction in FIG. 6A and FIG. 6B), there is a notch (that is, the notch 145) directly above the compression structure 13 of the USB-type C connector 12. For example, the notch 145 exposes the reflection sheet 142 on the backlight assembly 14 and the fastening tape 144 on the light guide plate 143. The notch 145 forms avoidance space in the Z direction, so that a thickness of the tablet computer 1 in the thickness direction can be reduced. To be specific, after the thickness of the tablet computer 1 is reduced, a security gap between the compression structure 13 of the USB-type C connector 12 and the backlight assembly 14 is ensured, a possibility of mutual interference between the compression structure 13 and the backlight assembly 14 in the Z direction is reduced, and a risk of poor display existing during use of the tablet computer 1 is reduced.

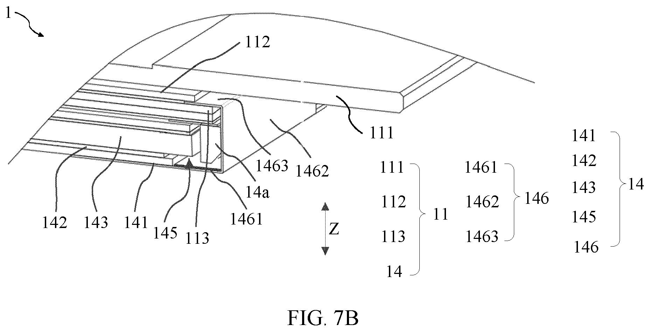

According to the claimed invention, referring to FIG. 7A and FIG. 7B, the backlight assembly 14 in the display module 11 further includes a light shielding member 146, and the light shielding member 146 is connected to the back plate 141 and is configured to wrap the notch 145. After the light shielding member 146 is disposed, the following cases may be avoided: (1) Backlight is exposed at the provided notch, and a foreign object easily enters the backlight, causing display of defects such as a white spot, a white mass, or a foreign object. (2) Backlight is exposed at the provided notch, the backlight is emitted, and a defect of light leakage occurs in an entire device. In other words, after the light shielding member 146 is disposed, the light shielding member 146 is added at the notch 145 on the back plate 141 to wrap the notch, to prevent a foreign object from entering the backlight assembly 14 and further shield light.

For example, the light shielding member 146 is a black Mylar sheet, that is, the black Mylar sheet is used to include the notch on the back plate 141. In other words, the back plate 141 is provided with the notch to avoid the compression structure 13 of the USB type C connector 12, and a thickness of an entire device is further reduced. In addition, dustproof Mylar is used for wrapping to eliminate a risk of foreign object entry.

Still referring to FIG. 7B, the light shielding member 146 includes a first part 1461, a second part 1462, and a third part 1463 that are connected. The display module 11 further includes cover glass 111, an optically clear adhesive 112, and a liquid crystal panel 113 that are stacked from top to bottom in the thickness direction, and the liquid crystal panel 113 is adhered to an adhesive frame 14a. The first part 1461 of the light shielding member 146 is connected to a side that is of the back plate 141 of the back plate assembly 14 in the display module 11 and that is away from the reflection sheet 142, the second part 1462 is connected to a side surface (for example, the adhesive frame 14a) of the backlight assembly 14, and the third part 1463 is connected to a side that is of the liquid crystal panel 113 and that faces the cover glass 111. In other words, in the thickness direction (as shown by a Z direction in FIG. 7B), the first part 1461 and the third part 1463 of the light shielding member 146 are spaced apart, and the second part 1462 is separately connected to the first part 1461 and the third part 1463. Therefore, the light shielding member 146 can wrap the notch 145 on the back plate 141, to prevent a foreign object from entering the backlight assembly 14 from the notch 145.

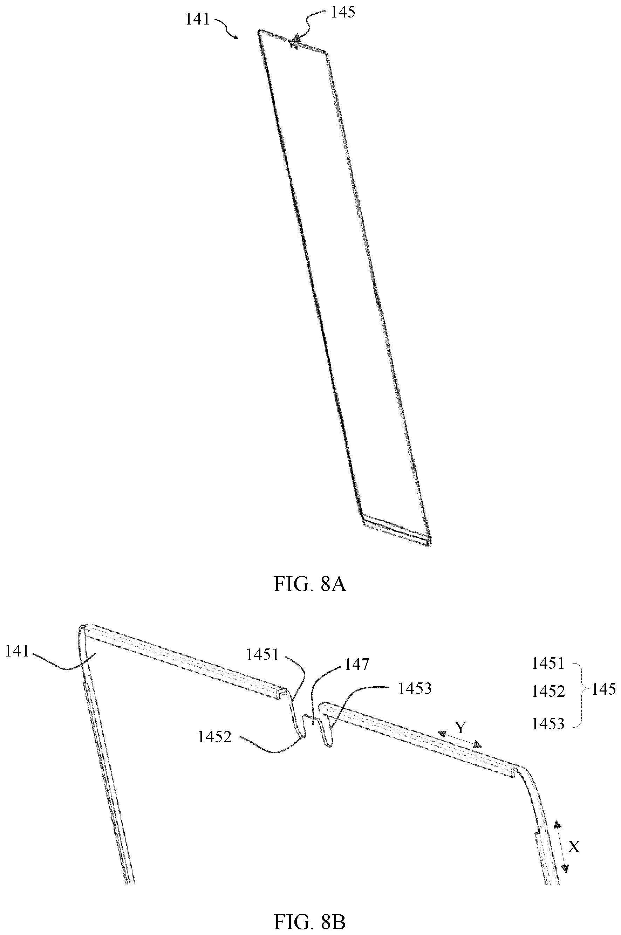

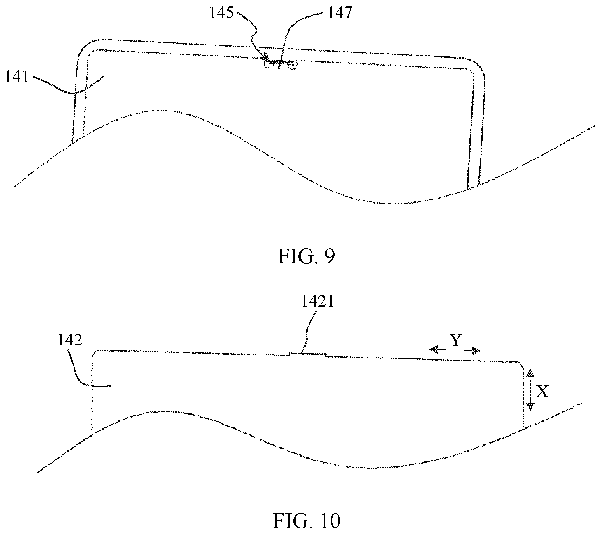

FIG. 8A is a first three-dimensional diagram of the back plate 141 according to an embodiment of this application, FIG. 8B is a second three-dimensional diagram of the back plate 141 according to an embodiment of this application, and FIG. 9 is a first partially enlarged view at the notch 145 on the back plate 141 according to an embodiment of this application.

As described above, because the back plate 141 is provided with the notch 145, after the notch 145 is disposed, there is no Z-direction support and protection for an internal film material at the provided notch. During a reliability test of an entire device, for example, during falling, the light guide plate 143 may swing and hit an external structural member, which is prone to cause a problem of cracking of the light guide plate 143. Therefore, in some possible implementations, as shown in FIG. 8B and FIG. 9, a convex lug 147 is disposed at the notch 145 on the back plate 141 in this embodiment of this application, and the convex lug 147 is configured to support the light guide plate 143 in the light emitting direction. The design of the convex lug 147 is used at the notch 145 on the back plate 141, which reduces a risk of film material deformation and cracking of light guide plate 143 in a falling process of the tablet computer 1.

In some possible implementations, the convex lug 147 is further configured to support the reflection sheet 142 in the light emitting direction.

A specific shape of the convex lug 147 is not limited in this application. In some possible implementations, referring to FIG. 8B, the notch 145 on the back plate 141 includes a first sidewall 1451, a bottom wall 1452, and a second sidewall 1453 that are sequentially connected. The bottom wall 1452 extends in a width direction (as shown by a Y direction in FIG. 8B), and the first sidewall 1451 and the second sidewall 1453 are disposed opposite to each other in the width direction and separately extend in a length direction (as shown by an X direction in FIG. 8B). The convex lug 147 in this embodiment of this application extends in the length direction and protrudes from the bottom wall 1452 in the width direction.

For example, the convex lug 147 is separately spaced apart from the first sidewall 1451 and the second sidewall 1453 in the width direction. For example, intervals between the convex lug 147 and the first sidewall 1451 and the second sidewall 1453 are used to avoid the compression structure 13 of the USB type C connector 12. Therefore, the convex lug 147 at the notch 145 on the back plate 141 supports the light guide plate 143, and the notch 145 on the back plate 141 avoids the compression structure 13 of the USB type C connector 12, thereby ensuring a security gap.

In some possible implementations, the convex lug 147 is separately shorter than the first sidewall 1451 and the second sidewall 1453 in the width direction. Through this disposing, the compression structure 13 of the USB type C connector 12 can also be avoided.

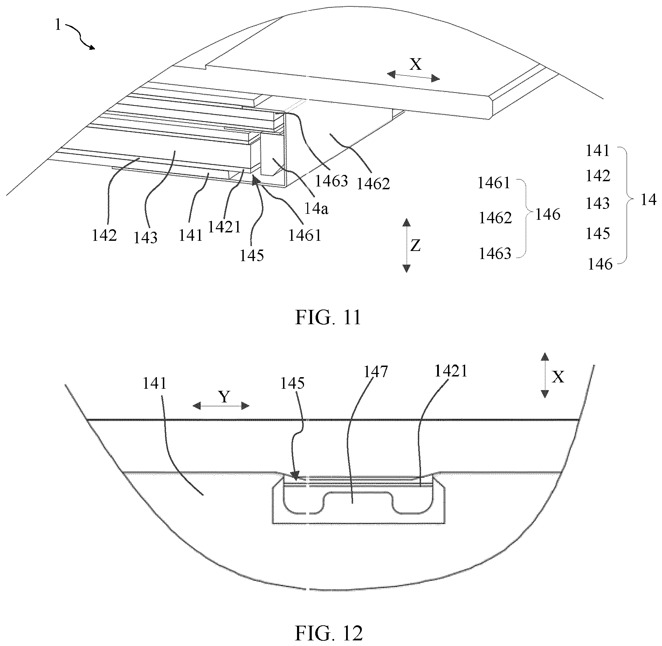

FIG. 10 is a three-dimensional diagram of the reflection sheet 142 according to an embodiment of this application, FIG. 11 is a three-dimensional diagram of the display module 11 according to an embodiment of this application, and FIG. 12 is a second partially enlarged view at the notch 145 on the back plate 141 according to an embodiment of this application.

In a mechanical reliability process of the tablet computer 1, the light guide plate 143 drives the reflection sheet 142 to displace. Although the light guide plate 143 is fastened through the fastening tape 144, relative displacement between the light guide plate 143 and the reflection sheet 142 after falling cannot be completely avoided. After a falling test, the reflection sheet 142 is displaced, and the reflection sheet 142 moves relative to a location of the light guide plate 143. The notch 145 on the back plate 141 may be unable to reflect light upward, resulting in a local blackening visible to eyes. Consequently, a display problem may occur in the display module 11 of the tablet computer 1. In addition, at the provided notch, there is no back adhesive to adhere the reflection sheet 142 to the back plate 141, and problems such as displacement and wrinkles easily occur during falling, resulting in abnormal display.

Therefore, referring to FIG. 10 to FIG. 12, in this embodiment of this application, a protrusion 1421 is disposed at a location that is on the reflection sheet 142 and that corresponds to the notch 145, and in the light emitting direction, projections of the reflection sheet 142 and the protrusion 1421 at least partially cover a projection of the notch 145. That is, the reflection sheet 142 in this embodiment of this application is designed in an irregular shape, and the reflection sheet 142 protrudes locally at the provided notch. Even if the reflection sheet 142 is displaced during falling of the tablet computer 1, a protruding part (that is, the protrusion 1421) on the reflection sheet 142 can still cover the notch (that is, the notch 145) on the back plate 141, so that the reflection sheet 142 provides sufficient reflected light, and no abnormal display occurs. For example, a reflection back adhesive at the provided notch on the back plate 141 may be removed, to design the reflection sheet 142 in the irregular shape. Only an appearance shape of the reflection sheet 142 is optimized, and there is no additional fixture costs.

For example, in the light emitting direction, the projections of the reflection sheet 142 and the protrusion 1421 completely cover the projection of the notch 145. For example, in the length direction, the protrusion 1421 on the reflection sheet 142 is disposed protruding from the convex lug 147. The protrusion 1421 added to the reflection sheet 142 covers the entire notch 145 on the back plate 141, and the fastening tape 144 of the light guide plate 143 is not visible at the notch 145 on the back plate 141. This disposing helps the reflection panel provide sufficient reflected light.

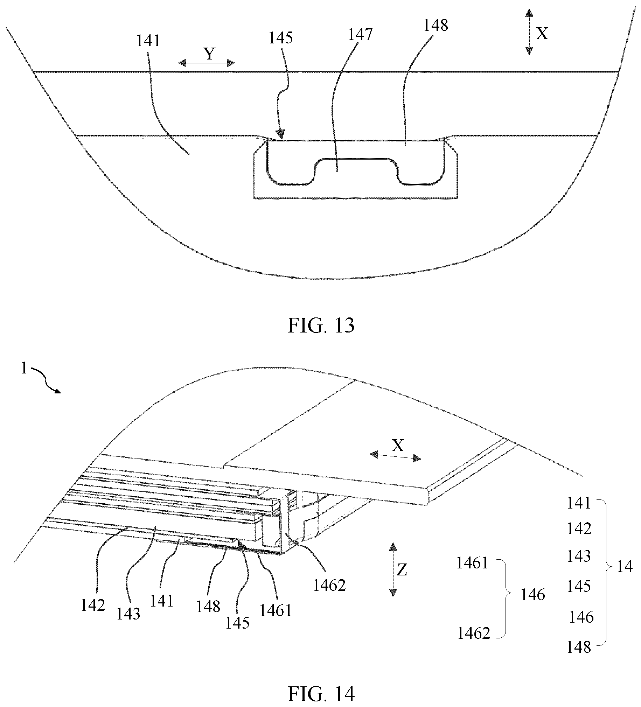

In addition, in some possible implementations, referring to FIG. 13 and FIG. 14, a white PET layer 148 is disposed at a location that is on the light shielding member 146 and that corresponds to the notch 145, and in the light emitting direction, a projection of the white PET layer 148 (polyethylene terephthalate) at least partially covers a projection of the notch 145. The white PET layer 148 is disposed on an inner wall of the dustproof Mylar that is added at the location of the provided notch. Even if the reflection sheet 142 is displaced during falling of the tablet computer 1, the white PET layer 148 can still provide enough reflected light. In other words, light may be reflected upward through the white PET layer 148, a display effect is not affected, and no abnormal display occurs. In other words, when the white PET layer 148 is disposed in the dustproof Mylar, a display problem caused by displacement of the reflection sheet 142 during falling can also be avoided.

For example, in the light emitting direction, the projection of the white PET layer 148 completely covers the projection of the notch 145. For example, in the length direction, the white PET layer 148 is disposed protruding from the convex lug 147.

In summary, in the display module in the embodiments of this application, the back plate is provided with the notch to avoid the compression structure of the USB type C connector, so that a thickness of an entire device is further reduced. Black Mylar is added at the location of the provided notch, to prevent a foreign object from entering the back plate, and further shield light. Appearance of the provided notch on the back plate is optimized, and the convex lug design is locally added to support an inner film of the display module, thereby reducing a risk of film material deformation of and cracking of the light guide plate during falling. For a display problem caused by displacement of the reflection sheet, the reflection sheet is designed convexly or the white PET layer is disposed in the dustproof Mylar, to avoid a display problem caused by displacement of the reflection sheet during falling.

## Claims

1. An electronic device (1), comprising:
a USB connector (12), comprising a compression structure (13); and a display module (11), the display module comprising a back plate (141), a reflection sheet (142), a light guide plate (143), and a light shielding member (146), wherein
a direction in which the reflection sheet (142) points to the light guide plate (143) is a light emitting direction of the display module (11), and in the light emitting direction, the reflection sheet is disposed between the back plate and the light guide plate;
wherein a notch (145) is disposed at a location that is on the back plate and that corresponds to the USB connector; and
the light shielding member is connected to the back plate and wraps the notch,
wherein in the light emitting direction of the display module, the back plate of the display module is disposed above the USB connector, and the notch is located above the compression structure of the USB connector.

2. The electronic device (1) according to claim 1, wherein the light shielding member (146) comprises a first part (1461) and a second part (1462) that are connected, the first part is connected to a side that is of the back plate and that is away from the reflection sheet, and the second part is connected to a side surface of the display module, to wrap the notch to prevent a foreign object from entering the display module from the notch.

3. The electronic device according to any one of claims 1 to 2, wherein a convex lug (147) is disposed at the notch (145) on the back plate (141), and the convex lug is configured to support the light guide plate in the light emitting direction.

4. The electronic device according to claim 3, wherein the convex lug (147) is further configured to support the reflection sheet in the light emitting direction.

5. The electronic device according to claim 3, wherein the notch (145) comprises a first sidewall (1451), a bottom wall (1452), and a second sidewall (1453) that are sequentially connected;
the bottom wall extends in a first direction;
the first sidewall and the second sidewall are disposed opposite to each other in the first direction and separately extend in a second direction, the first direction and the second direction intersect, and the light emitting direction is separately perpendicular to the first direction and the second direction; and
the convex lug extends in the first direction, and protrudes from the bottom wall in the second direction.

6. The electronic device according to claim 5, wherein in the first direction, the convex lug (147) is separately spaced apart from the first sidewall (1451) and the second sidewall (1453).

7. The electronic device according to claim 6, wherein intervals between the convex lug (147) and the first sidewall and the second sidewall are used to avoid a compression structure (13) of the USB connector (12).

8. The electronic device (1) according to any one of claims 5 to 7, wherein in the second direction, the convex lug (147) is separately shorter than the first sidewall and the second sidewall, to avoid the compression structure of the USB connector.

9. The electronic device (1) according to any one of claims 1 to 2 and 4 to 7, wherein a protrusion (1421) is disposed at a location that is on the reflection sheet (142) and that corresponds to the notch (145), and in the light emitting direction, projections of the reflection sheet and the protrusion at least partially cover a projection of the notch.

10. The electronic device (1) according to claim 9, wherein in the light emitting direction, the projections of the reflection sheet (142) and the protrusion (1421) completely cover the projection of the notch.

11. The electronic device (1) according to any one of claims 1 to 2 and 4 to 7, wherein a white PET layer (148) is disposed at a location that is on the light shielding member and that corresponds to the notch (145), and in the light emitting direction, a projection of the white PET layer at least partially covers a projection of the notch.

12. The electronic device (1) according to claim 11, wherein in the light emitting direction, the projection of the white PET layer completely covers the projection of the notch (145).

## Patentansprüche

1. Elektronische Vorrichtung (1), umfassend:
einen USB-Anschluss (12), der eine Kompressionsstruktur (13) umfasst; und ein Anzeigemodul (11), wobei das Anzeigemodul eine Rückplatte (141), eine Reflexionsfolie (142), eine Lichtleiterplatte (143) und ein Lichtabschirmungselement (146) umfasst, wobei
eine Richtung, in der die Reflexionsfolie (142) auf die Lichtleiterplatte (143) weist, eine Lichtemissionsrichtung des Anzeigemoduls (11) ist, und in der Lichtemissionsrichtung die Reflexionsfolie zwischen der Rückplatte und der Lichtleiterplatte angeordnet ist;
wobei eine Aussparung (145) an einer Stelle auf der Rückplatte angeordnet ist, die dem USB-Anschluss entspricht; und
das Lichtabschirmungselement mit der Rückplatte verbunden ist und die Aussparung umschließt,
wobei in der Lichtemissionsrichtung des Anzeigemoduls die Rückplatte des Anzeigemoduls über dem USB-Anschluss angeordnet ist und die Aussparung oberhalb der Kompressionsstruktur des USB-Anschlusses liegt.

2. Elektronische Vorrichtung (1) nach Anspruch 1, wobei das Lichtabschirmungselement (146) einen ersten Teil (1461) und einen zweiten Teil (1462) umfasst, die miteinander verbunden sind, wobei der erste Teil mit einer Seite der Rückplatte verbunden ist, die von der Reflexionsfolie abgewandt ist, und der zweite Teil mit einer Seitenfläche des Anzeigemoduls verbunden ist, um die Aussparung zu umschließen und zu verhindern, dass ein Fremdkörper durch die Aussparung in das Anzeigemodul eindringt.

3. Elektronische Vorrichtung nach einem der Ansprüche 1 bis 2, wobei an der Aussparung (145) auf der Rückplatte (141) ein konvexer Vorsprung (147) angeordnet ist, und der konvexe Vorsprung dazu konfiguriert ist, die Lichtleiterplatte in der Lichtemissionsrichtung zu stützen.

4. Elektronische Vorrichtung nach Anspruch 3, wobei der konvexe Vorsprung (147) ferner dazu konfiguriert ist, die Reflexionsfolie in der Lichtemissionsrichtung zu stützen.

5. Elektronische Vorrichtung nach Anspruch 3, wobei die Aussparung (145) eine erste Seitenwand (1451), eine Bodenwand (1452) und eine zweite Seitenwand (1453) umfasst, die nacheinander verbunden sind;
die Bodenwand sich in einer ersten Richtung erstreckt;
die erste Seitenwand und die zweite Seitenwand einander in der ersten Richtung gegenüberliegend angeordnet sind und sich separat in einer zweiten Richtung erstrecken, wobei sich die erste Richtung und die zweite Richtung schneiden, und die Lichtemissionsrichtung jeweils senkrecht zur ersten Richtung und zur zweiten Richtung verläuft; und
der konvexe Vorsprung sich in der ersten Richtung erstreckt und von der Bodenwand in der zweiten Richtung vorsteht.

6. Elektronisches Gerät nach Anspruch 5, wobei in der ersten Richtung der konvexe Vorsprung (147) getrennt von der ersten Seitenwand (1451) und der zweiten Seitenwand (1453) beabstandet ist.

7. Elektronisches Gerät nach Anspruch 6, wobei Abstände zwischen dem konvexen Vorsprung (147) und der ersten Seitenwand sowie der zweiten Seitenwand dazu dienen, eine Kompressionsstruktur (13) des USB-Anschlusses (12) zu vermeiden.

8. Elektronisches Gerät (1) nach einem der Ansprüche 5 bis 7, wobei in der zweiten Richtung der konvexe Vorsprung (147) jeweils kürzer als die erste Seitenwand und die zweite Seitenwand ist, um die Kompressionsstruktur des USB-Anschlusses zu vermeiden.

9. Elektronisches Gerät (1) nach einem der Ansprüche 1 bis 2 und 4 bis 7, wobei ein Vorsprung (1421) an einer Stelle angeordnet ist, die sich auf der Reflexionsfolie (142) befindet und der Kerbe (145) entspricht, und wobei in Lichtemissionsrichtung Projektionen der Reflexionsfolie und des Vorsprungs eine Projektion der Kerbe zumindest teilweise abdecken.

10. Elektronisches Gerät (1) nach Anspruch 9, wobei in Lichtemissionsrichtung die Projektionen der Reflexionsfolie (142) und des Vorsprungs (1421) die Projektion der Kerbe vollständig abdecken.

11. Elektronisches Gerät (1) nach einem der Ansprüche 1 bis 2 und 4 bis 7, wobei eine weiße PET-Schicht (148) an einer Stelle angeordnet ist, die sich auf dem Lichtabschirmungselement befindet und der Kerbe (145) entspricht, und wobei in Lichtemissionsrichtung eine Projektion der weißen PET-Schicht eine Projektion der Kerbe zumindest teilweise abdeckt.

12. Elektronisches Gerät (1) nach Anspruch 11, wobei in Lichtemissionsrichtung die Projektion der weißen PET-Schicht die Projektion der Kerbe (145) vollständig abdeckt.

## Revendications

1. Dispositif électronique (1), comprenant :
un connecteur USB (12), comprenant une structure de compression (13) ; et un module d'affichage (11), le module d'affichage comprenant une plaque arrière (141), une feuille de réflexion (142), une plaque guide de lumière (143) et un élément de blindage lumineux (146), dans lequel
une direction dans laquelle la feuille de réflexion (142) pointe vers la plaque guide de lumière (143) est une direction d'émission de lumière du module d'affichage (11), et dans la direction d'émission de lumière, la feuille de réflexion est disposée entre la plaque arrière et la plaque guide de lumière ;
dans lequel une encoche (145) est disposée à un emplacement qui se trouve sur la plaque arrière et qui correspond au connecteur USB ; et
l'élément de blindage lumineux est relié à la plaque arrière et enveloppe l'encoche,
dans lequel, dans la direction d'émission de lumière du module d'affichage, la plaque arrière du module d'affichage est disposée au-dessus du connecteur USB, et l'encoche est située au-dessus de la structure de compression du connecteur USB.

2. Dispositif électronique (1) selon la revendication 1, dans lequel l'élément de blindage lumineux (146) comprend une première partie (1461) et une seconde partie (1462) qui sont reliées, la première partie est reliée à un côté qui est celui de la plaque arrière et qui est éloigné de la feuille de réflexion, et la seconde partie est reliée à une surface latérale du module d'affichage, pour envelopper l'encoche afin d'empêcher un corps étranger de pénétrer dans le module d'affichage à partir de l'encoche.

3. Dispositif électronique selon l'une quelconque des revendications 1 à 2, dans lequel une patte convexe (147) est disposée au niveau de l'encoche (145) sur la plaque arrière (141), et la patte convexe est configurée pour supporter la plaque guide de lumière dans la direction d'émission de lumière.

4. Dispositif électronique selon la revendication 3, dans lequel la patte convexe (147) est en outre configurée pour supporter la feuille de réflexion dans la direction d'émission de lumière.

5. Dispositif électronique selon la revendication 3, dans lequel l'encoche (145) comprend une première paroi latérale (1451), une paroi inférieure (1452) et une seconde paroi latérale (1453) qui sont reliées séquentiellement ;
la paroi inférieure s'étend dans une première direction ;
la première paroi latérale et la seconde paroi latérale sont disposées à l'opposé l'une de l'autre dans la première direction et s'étendent séparément dans une seconde direction, la première direction et la seconde direction se croisent, et la direction d'émission de lumière est perpendiculaire séparément à la première direction et à la seconde direction ; et
la patte convexe s'étend dans la première direction et fait saillie à partir de la paroi inférieure dans la seconde direction.

6. Le dispositif électronique selon la revendication 5, dans lequel, dans la première direction, la patte convexe (147) est espacée séparément de la première paroi latérale (1451) et de la seconde paroi latérale (1453).

7. Le dispositif électronique selon la revendication 6, dans lequel les intervalles entre la patte convexe (147) et la première paroi latérale et la seconde paroi latérale sont utilisés pour éviter une structure de compression (13) du connecteur USB (12).

8. Le dispositif électronique (1) selon l'une quelconque des revendications 5 à 7, dans lequel, dans la seconde direction, la patte convexe (147) est séparément plus courte que la première paroi latérale et la seconde paroi latérale, afin d'éviter la structure de compression du connecteur USB.

9. Le dispositif électronique (1) selon l'une quelconque des revendications 1 à 2 et 4 à 7, dans lequel une saillie (1421) est disposée à un emplacement qui se trouve sur la feuille réfléchissante (142) et qui correspond à l'encoche (145), et dans la direction d'émission de lumière, les projections de la feuille réfléchissante et de la saillie recouvrent au moins partiellement une projection de l'encoche.

10. Le dispositif électronique (1) selon la revendication 9, dans lequel, dans la direction d'émission de lumière, les projections de la feuille réfléchissante (142) et de la saillie (1421) recouvrent complètement la projection de l'encoche.

11. Le dispositif électronique (1) selon l'une quelconque des revendications 1 à 2 et 4 à 7, dans lequel une couche de PET blanc (148) est disposée à un emplacement qui se trouve sur l'élément de blindage lumineux et qui correspond à l'encoche (145), et dans la direction d'émission de lumière, une projection de la couche de PET blanc recouvre au moins partiellement une projection de l'encoche.

12. Le dispositif électronique (1) selon la revendication 11, dans lequel, dans la direction d'émission de lumière, la projection de la couche de PET blanc recouvre complètement la projection de l'encoche (145).
